# EUROPEAN PATENT APPLICATION

(11) **EP 2 317 092 A1**
(43) Date of publication of application: **04.05.2011**
(21) Application number: 10188821.2
(22) Date of filing: 26.10.2010
(51) Int. Cl.: F01N 3/20, F01N 9/00, F02M 25/07

(54) **Exhaust gas purification apparatus for internal combustion engine**

(30) Priority: 30.10.2009 JP 2009249592
(71) Applicant: Kabushiki Kaisha Toyota Jidoshokki, Kariya-shi, Aichi 448-8671 (JP)
(72) Inventor: Takahashi, Junichi, Kariya-shi Aichi 448-8671 (JP)
(74) Representative: TBK-Patent

(57) **Abstract**

An exhaust gas purification apparatus includes an exhaust passage through which exhaust gas discharged from an engine flows, a selective catalytic reduction catalyst provided in the exhaust passage, a urea water supply device for supplying urea water into the exhaust passage upstream of the selective catalytic reduction catalyst, a sensor responding to respective quantities of NOx and ammonia downstream of the selective catalytic reduction catalyst and detecting a value based on the response by the sensor, an exhaust gas recirculation passage through which a part of exhaust gas is refluxed to an intake system of the engine, an exhaust gas recirculation control valve for controlling amount of exhaust gas that is refluxed through the exhaust gas recirculation passage and a control device for controlling quantity of urea water supplied from the urea water supply device to the exhaust passage and also opening and closing of the exhaust gas recirculation control valve. The control device controls opening and closing of the exhaust gas recirculation control valve so as to increase or decrease the amount of exhaust gas refluxed through the exhaust gas recirculation passage for a predetermined period of time and also determines quantity of urea water based on change between the values detected by the sensor before and after changing opening and closing of the exhaust gas recirculation control valve.

## Description

### BACKGROUND OF THE INVENTION

The present invention relates to an exhaust gas purification apparatus for an internal combustion engine.

NOx (nitrogen oxides) contained in exhaust gas discharged from an internal combustion engine is reduced by an exhaust gas purification apparatus. Specifically, the exhaust gas purification apparatus for a diesel engine uses a selective catalytic reduction catalyst (hereinafter referred to as SCR catalyst) in the exhaust system of the diesel engine. The SCR catalyst is supplied with a reducing agent such as urea and ammonia generated from the urea is adsorbed on the SCR catalyst for selectively reducing NOx contained in exhaust gas.

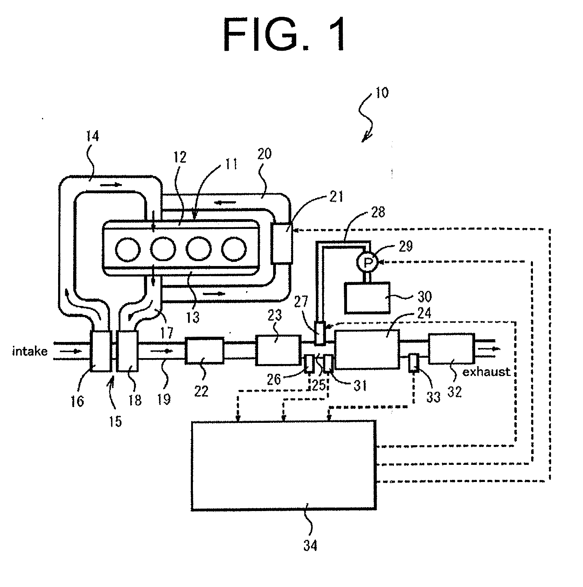

Published Japanese translation 2009-507175 of PCT International Publication (pages 5-9, FIG. 1) discloses an exhaust gas purification apparatus including a urea SCR catalyst provided in the exhaust system of an internal combustion engine, a reactant supply device for supplying ammonia as a reactant (reducing agent) to the SCR catalyst and NOx sensors provided upstream and downstream of the SCR catalyst. Concentration of NOx contained in exhaust gas discharged from the engine is detected by the upstream NOx sensor and the quantity of ammonia to be supplied to the SCR catalyst is determined based on the detected NOx concentration. Sum of the concentration of NOx that is discharged without being removed in the SCR catalyst and the quantity of ammonia that slips (overflows) due to excessive supply of ammonia is detected by the downstream NOx sensor. The quantity of ammonia to be supplied to the SCR catalyst is corrected based on the sum, thus making possible suppression of the quantity of ammonia that slips.

However, a NOx sensor normally has a cross-sensitivity for NOx and ammonia and, therefore, it is very difficult to estimate the concentrations of NOx and ammonia in exhaust gas based on the detection signal (sum) from the downstream NOx sensor according to the apparatus of the above Publication (pages 5-9, FIG. 1). Since it can not be instantly determined that the signal from the downstream NOx sensor is due to ammonia slip, especially when ammonia slips a lot, it takes a long time before ammonia slipping is stopped. Therefore, there is a fear of odor caused by ammonia slipping to the outside.

The present invention is directed to providing an exhaust gas purification apparatus for an internal combustion engine that determines the state of quantity of ammonia in SCR catalyst easily and suppresses the quantity of ammonia slipping from the SCR catalyst.

### SUMMARY OF THE INVENTION

An exhaust gas purification apparatus includes an exhaust passage through which exhaust gas discharged from an engine flows, a selective catalytic reduction catalyst provided in the exhaust passage, a urea water supply device for supplying urea water into the exhaust passage upstream of the selective catalytic reduction catalyst, a sensor responding to respective quantities of NOx and ammonia downstream of the selective catalytic reduction catalyst and detecting a value based on the response by the sensor, an exhaust gas recirculation passage through which a part of exhaust gas is refluxed to an intake system of the engine, an exhaust gas recirculation control valve for controlling amount of exhaust gas that is refluxed through the exhaust gas recirculation passage and a control device for controlling quantity of urea water supplied from the urea water supply device to the exhaust passage and also opening and closing of the exhaust gas recirculation control valve. The control device controls opening and closing of the exhaust gas recirculation control valve so as to increase or decrease the amount of exhaust gas refluxed through the exhaust gas recirculation passage for a predetermined period of time and also determines quantity of urea water based on change between the values detected by the sensor before and after changing opening and closing of the exhaust gas recirculation control valve.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic view showing an exhaust gas purification apparatus and its associated components according to a first embodiment of the present invention;
FIG. 2A is a configuration map 1 showing the relation between the state of quantity of ammonia and the OUT-NOx sensor value (or the value detected by OUT-NOx sensor as will be described later) during the EGR decrease control in the exhaust gas purification apparatus according to the first embodiment;
FIG. 2B is a schematic configuration figure showing the relation among the quantity of NOx emission, the quantity of ammonia and the OUT-NOx sensor value and explaining what the map 1 means;
FIG. 3 is a flow chart showing a processing routine for the exhaust gas purification apparatus according to the first embodiment;
FIG. 4A is a configuration map 2 showing the relation between the state of quantity of ammonia and the OUT-NOx sensor value during the EGR increase control in an exhaust gas purification apparatus according to a second embodiment;
FIG. 4B is a schematic configuration figure showing the relation among the quantity of NOx emission, the quantity of ammonia and the OUT-NOx sensor value and explaining what the map 2 means;
FIG. 5 is a flow chart showing a processing routine for the exhaust gas purification apparatus according to the second embodiment;
FIG. 6A is a flow chart showing a processing routine for correcting the OUT-NOx sensor value based on history data stored due to secular change in an exhaust gas purification apparatus according to a third embodiment; and
FIG. 6B is a flow chart showing a processing routine for correcting the error of the OUT-NOx sensor value due to the manufacturing error, based on history data in the exhaust gas purification apparatus according to the third embodiment.

### DETAILED DESCRIPTION OF THE PREFERRED EMBODIMENTS

The following will describe the exhaust gas purification apparatus for a diesel engine as an internal combustion engine according to the first embodiment with reference to FIGS. 1 through 3. Referring to FIG. 1, the exhaust gas purification apparatus is designated generally by 10 and the diesel engine by 11. As shown in FIG. 1, the diesel engine (hereinafter referred to as engine) includes an intake manifold 12 and an exhaust manifold 13. The intake manifold 12 is connected at the inlet thereof through an intake duct 14 to the outlet of a compressor 16 of a turbocharger 15 and the inlet of the compressor 16 is connected to an air cleaner (not shown). On the other hand, the exhaust manifold 13 is connected at the outlet thereof through an exhaust duct 17 to the inlet of an exhaust gas turbine 18 of the turbocharger 15 and the outlet of the exhaust gas turbine 18 is connected to an exhaust passage 19. Exhaust gas discharged from the engine 11 flows through the exhaust gas turbine 18 and the exhaust passage 19.

The engine 11 has an exhaust gas recirculation passage (hereinafter referred to as EGR passage) 20 through which the exhaust duct 17 and the intake duct 14 are connected to each other and a part of exhaust gas is refluxed to the intake system of the engine 11. An EGR control valve 21 is provided in the EGR passage 20 for controlling the amount of exhaust gas that is refluxed through the EGR passage 20.

A diesel oxidation catalyst (hereinafter referred to as DOC) 22 is provided in the exhaust passage 19 for oxidizing hydrocarbons and carbon monoxide contained in exhaust gas. Noble metal catalyst such as platinum is used for the DOC 22. A diesel particulate filter (hereinafter referred to as DPF) 23 is provided downstream of the DOC 22 for capturing and collecting particulate matter contained in exhaust gas.

A selective catalytic reduction catalyst (hereinafter referred to as SCR catalyst) 24 is provided downstream of the DPF 23 for selectively reducing NOx contained in exhaust gas. Ammonia adsorption type Fe zeolite having a high NOx purification rate under a low temperature is used for the SCR catalyst 24. An IN-NOx sensor 26 is provided in an exhaust gas pipe 25 upstream of the SCR catalyst 24 for detecting the quantity of NOx contained in exhaust gas. The quantity of NOx detected by the IN-NOx sensor 26 will be hereinafter referred to as quantity of IN-NOx. The exhaust gas pipe 25 forms a part of the exhaust passage 19.

A urea water supply valve 27 is provided in the exhaust gas pipe 25 between the IN-NOx sensor 26 and the SCR catalyst 24 and connected to a urea water tank 30 through a supply pipe 28 and a supply pump 29. The urea water supply valve 27 corresponds to the urea water supply device of the invention. Urea water reserved in the urea water tank 30 is pumped by a supply pump 29 and injected through the urea water supply valve 27 to exhaust gas flowing through the exhaust gas pipe 25. Ammonia (NH3) generated by hydrolysis of urea water is adsorbed on the SCR catalyst 24 and NOx contained in exhaust gas is selectively reduced by the ammonia adsorbed on the SCR catalyst 24.

A temperature sensor 31 is provided in the exhaust gas pipe 25 between the urea water supply valve 27 and the SCR catalyst 24 for detecting the temperature of the SCR catalyst 24. A diesel oxidation catalyst 32 (hereinafter referred to as DOC) is provided downstream of the SCR catalyst 24 for oxidizing ammonia slipped from the SCR catalyst 24. An OUT-NOx sensor 33 is provided in the exhaust gas pipe 25 between the SCR catalyst 24 and the DOC 32 for detecting the quantity of NOx contained in exhaust gas flowing through the SCR catalyst 24. The OUT-NOx sensor 33 that corresponds to a sensor responding to respective quantities of NOx and ammonia has cross-sensitivity between ammonia and NOx and can detect the quantities of discharged NOx and slipped ammonia.

A control device 34 for controlling the operation of the exhaust gas purification apparatus 10 is connected to the IN-NOx sensor 26, the temperature sensor 31, the OUT-NOx sensor 33, the urea water supply valve 27, the supply pump 29 and the EGR control valve 21. The control device 34 is operable to control the quantity of urea water supplied from the urea water supply valve 27 to the exhaust passage 19, but also to change forcibly the amount of exhaust gas refluxed through the EGR passage 20 by controlling opening and closing of the EGR control valve 21.

Departing from the normal EGR control, the control device 34 is operable to force the opening of the EGR control valve 21 in the direction to close the valve for a predetermined period of time, thereby decreasing the amount of exhaust gas refluxed through the EGR passage 20 (This control will be hereinafter referred to EGR decrease control). Accordingly, the quantity of NOx in exhaust gas discharged to the exhaust passage 19 is increased. The state of quantity of ammonia in the SCR catalyst 24 (i.e. excessive, inadequate, appropriate) can be determined by detecting the change of values of the OUT-NOx sensor 33 before and after the EGR decrease control.

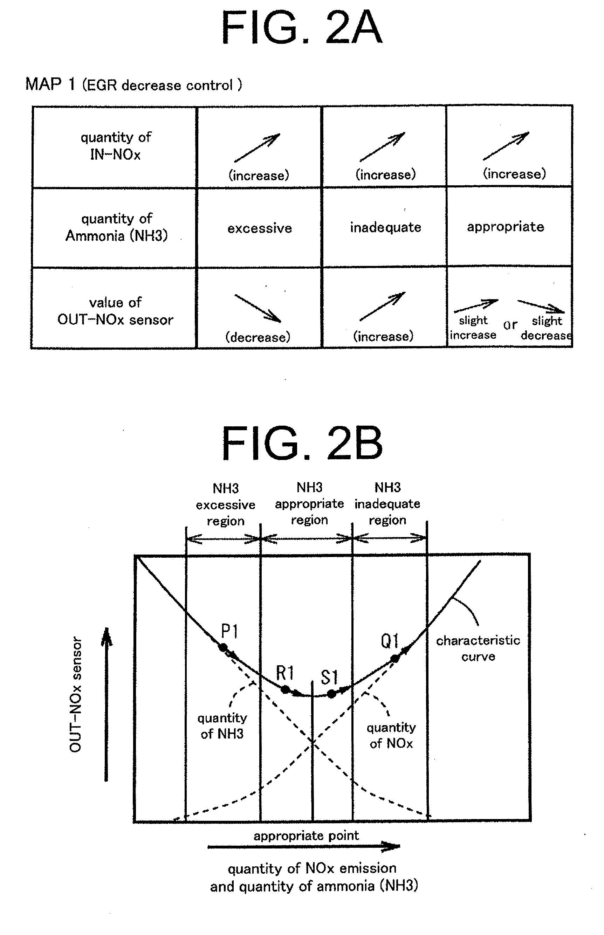

FIG. 2A is a configuration map 1 showing the relation between the state of quantity of ammonia and the OUT-NOx sensor value (a value detected by the OUT-NOx sensor 33) during the EGR decrease control. If the quantity of ammonia is excessive and ammonia slip occurs, the OUT-NOx sensor value shows a decreasing tendency when the quantity of IN-NOx increases. If the quantity of ammonia is inadequate and NOx reduction is not performed, the OUT-NOx sensor value shows an increasing tendency when the quantity of IN-NOx increases. If the quantity of ammonia is appropriate and NOx reduction is performed, the OUT-NOx sensor value shows a slightly increasing or a slightly decreasing tendency (or no change) when the quantity of IN-NOx increases.

FIG. 2B is a schematic configuration figure showing the relation among the quantity of NOx emission, the quantity of ammonia and the OUT-NOx sensor value for explaining what the map 1 means. The characteristic curve of the figure shows a characteristic of the relation when the quantity of urea water supplied by the urea water supply valve 27 is set at a certain constant value. As shown in FIG. 2B, with the quantities of NOx emission and the ammonia on the axis of abscissas and the OUT-NOx sensor value on the axis of ordinate, the characteristic curve is convex downward by the cross-sensitivity of the OUT-NOx sensor 33. This characteristic curve shows that the quantity of ammonia is the most appropriate for the quantity of NOx emission when the OUT-NOx sensor value is minimum. The characteristic curve is divided into three regions depending on the value of NOx emission. The region which includes the minimum OUT-NOx sensor value represents the ammonia appropriate region. The region in which the quantities of NOx emission and ammonia are less than those of the ammonia appropriate region represents the ammonia excessive region and the region in which the quantities of NOx emission and ammonia are more than those of the ammonia appropriate region represents the ammonia inadequate region.

When the quantity of IN-NOx increases in the ammonia excessive region, the point P1 on the characteristic curve moves in arrow direction shown in FIG. 2B and, therefore, the OUT-NOx sensor value shows a decreasing tendency. When the quantity of IN-NOx increases in the ammonia inadequate region, the point Q1 on the characteristic curve moves in arrow direction shown in FIG. 2B and, therefore, the OUT-NOx sensor value shows an increasing tendency. When the quantity of IN-NOx increases in the ammonia appropriate region, points R1, S1 on the characteristic curve move in arrow directions shown in FIG. 2B and, therefore, the OUT-NOx sensor values show a slightly decreasing tendency and a slightly increasing tendency, respectively.

As appreciated from the above, by monitoring the change of the OUT-NOx sensor values during the EGR decrease control, it can be determined easily which region of the OUT-NOx sensor value having cross-sensitivity is being detected. Therefore, the quantity of urea water to be supplied from the urea water supply valve 27 can be controlled based on the above determination. In other words, when the OUT-NOx sensor value tends to decrease, the control device 34 determines that the quantity of ammonia contained in the exhaust gas is excessively large, thereby controlling so as to decrease the quantity of urea water to be supplied from the urea water supply valve 27. When the OUT-NOx sensor value tends to increase, the control device 34 determines that the quantity of ammonia contained in the exhaust gas is inadequate, thereby controlling so as to increase the quantity of urea water to be supplied from the urea water supply valve 27. Further, when the OUT-NOx sensor value shows a slightly increasing or decreasing tendency, the control device 34 determines that the quantity of ammonia contained in the exhaust gas is appropriate, thereby controlling so as to keep the quantity of urea water being supplied from the urea water supply valve 27 unchanged.

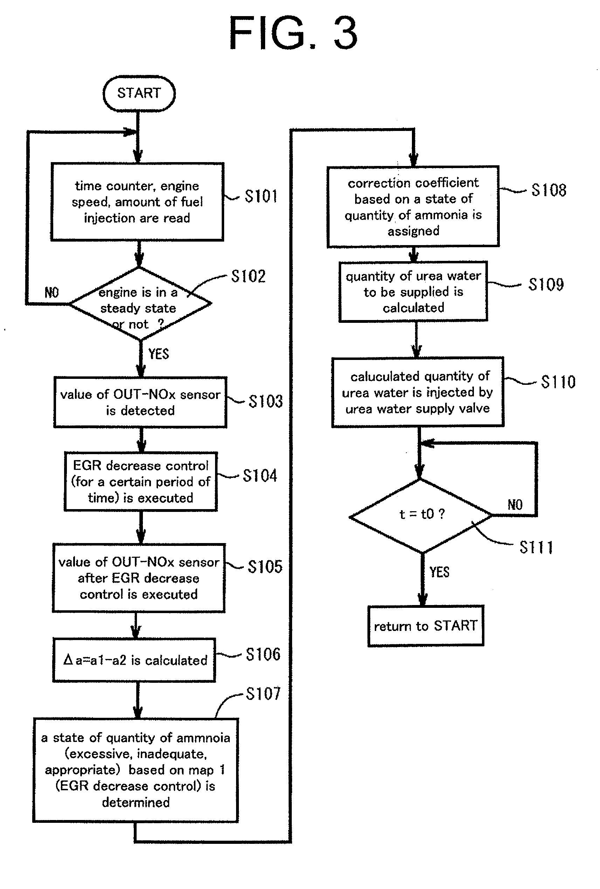

The following will describe a process for controlling the exhaust gas purification apparatus 10 with reference to the flow chart shown in FIG. 3. When the processing routine starts, the time counter, the engine speed and the amount of fuel injection are read at S101. Then, at S102, the control device 34 determines whether the engine 11 is in a steady state or not based on the data of the time counter, the engine speed and the amount of fuel injection read at S101. The engine speed and the amount of fuel injection change rapidly just after the engine 11 is started and will be stabilized when the engine speed reaches a constant speed in a certain period of time after the engine-start. When the vehicle is accelerated for overtaking and the like, the engine speed and the amount of fuel injection change rapidly. The steady state means that the engine speed and the amount of fuel injection keep substantially constant values, respectively. Such state occurs e.g., when the vehicle is running at a constant speed. A state of a vehicle when the engine speed or the amount of fuel injection change rapidly just after the engine 11 is started or when the vehicle is accelerated rapidly is not a steady state. When it is determined at S102 that the engine 11 is not in the steady state, the control returns to S101 and the data is read again.

When it is determined at S102 that the engine 11 is in the steady state, the control proceeds to S103 where the value detected by the OUT-NOx sensor 33 is detected. Then at S104, the EGR decrease control is executed forcibly, so that the operation of the EGR control valve 21 is controlled so that the opening of the EGR control valve 21 is decreased for a certain period of time. Accordingly, amount of exhaust gas refluxed through the EGR passage 20 decreases, thereby increasing the quantity of IN-NOx in exhaust gas discharged into the exhaust passage 19. The above certain period of time is previously set to an appropriate time in accordance with the temperature of the SCR catalyst 24.

Then at S105, the value detected by the OUT-NOx sensor 33 after the execution of the EGR decrease control is detected. Let a1 and a2 as the values (values detected by the OUT-NOx sensor 33 detected at S103, S105, respectively) before and after the EGR decrease control, respectively. At S106, a difference value for the above values, i.e., Δa=a1-a2 is calculated. At S107, if Δa<-d (d is positive number), it is determined that the value detected by the OUT-NOx sensor 33 shows a decreasing tendency. If Δ a>d, it is determined that the value detected by the OUT-NOx sensor 33 shows an increasing tendency. If -d≦ Δ a ≦ d, it is determined that the value detected by the OUT-NOx sensor 33 shows a slightly increasing or decreasing tendency.

At S107, based on the map 1 showing the relation between the state of quantity of ammonia and the OUT-NOx sensor value during the EGR decrease control, determination of the state of quantity of ammonia (i.e. excessive, inadequate or appropriate state) is made on the calculated OUT-NOx sensor value. For example, if the OUT-NOx sensor value shows a decreasing tendency (Δ a<-d), it is determined that the quantity of ammonia is in the excessive state. If the OUT-NOx sensor value shows an increasing tendency (Δ a>d), it is determined that the quantity of ammonia is in the inadequate state. If the OUT-NOx sensor value shows a slightly increasing or decreasing tendency (-d≦ Δ a ≧ d), it is determined that the quantity of ammonia is in the appropriate state.

At S108, based on the quantity of ammonia determined at S107, a correction coefficient is assigned. For example, correction coefficients 0.7, 1.3 and 1.0 are assigned for the excessive, inadequate and appropriate states, respectively. At S109, the quantity of urea water to be supplied is calculated. This calculation is made based on the following calculation formula. Quantity of urea water to be supplied = base supply quantity x correction coefficient. For example, the quantity of urea water to be supplied in case of the excessive state is the base supply quantity x 0.7. The quantity of urea water to be supplied in the case of the inadequate state is the base supply quantity x 1.3. The quantity of urea water to be supplied in the case of the appropriate state is the base supply quantity x 1.0.

At S110, a calculated amount of urea water is injected by the urea water supply valve 27. Then, at S111, it is determined whether time to has elapsed or not. When the time to has elapsed, the control procedure returns to the start and the sequence of procedures from S101 through S110 are executed again. When the time to has not yet elapsed, the procedure returns to S111. The above procedure is executed at a predetermined timing automatically based on a program stored in a memory of the control device 34.

The exhaust gas purification apparatus 10 according to the first embodiment offers the following advantageous effects.
(1) Departing from the normal EGR control, the control device 34 is operable to force the opening of the EGR control valve 21 in the direction to close the valve for a predetermined period of time, thereby decreasing the amount of exhaust gas refluxed through the EGR passage 20. Accordingly, the quantity of NOx in.exhaust gas discharged to the exhaust passage 19 is increased. By detecting the change of values of the OUT-NOx sensor 33 before and after the EGR decrease control, the state of quantity of ammonia in the SCR catalyst 24 (i.e. excessive, inadequate or appropriate) can be detremined.
(2) The map 1 shows the relation between the state of quantity of ammonia and the OUT-NOx sensor value during the EGR decrease control. If the quantity of ammonia is excessive and ammonia is slipping, the OUT-NOx sensor value shows a decreasing tendency when the quantity of IN-NOx increases. If the quantity of ammonia is inadequate and NOx reduction is not performed, the OUT-NOx sensor value shows an increasing tendency when the quantity of IN-NOx increases. If the quantity of ammonia is appropriate and NOx reduction is performed, the OUT-NOx sensor value shows a slightly increasing or decreasing tendency (or no change) when the quantity of IN-NOx increases. The state of quantity of ammonia in the SCR catalyst 24 can be determined from the OUT-NOx sensor value based on the map 1.
(3) When the OUT-NOx sensor value shows a decreasing tendency after the EGR decrease control, the control device 34 determines that ammonia contained in the exhaust gas is excessive, thereby controlling to decrease the quantity of urea water to be supplied from the urea water supply valve 27. When the OUT-NOx sensor value shows an increasing tendency, the control device 34 determines that ammonia contained in the exhaust gas is inadequate, thereby controlling to increase the quantity of urea water to be supplied from the urea water supply valve 27. Further, when the OUT-NOx sensor value shows a slightly increasing or decreasing tendency, the control device 34 determines that ammonia contained in the exhaust gas is appropriate, thereby controlling to keep the quantity of urea water to be supplied from the urea water supply valve 27 unchanged. Since the quantity of urea water to be supplied can be controlled appropriately in accordance with the quantity of ammonia, the ammonia slip from the SCR catalyst 24 can be suppressed. Also, by shortening the predetermined time of the EGR decrease control, the increase in the quantity of NOx can be suppressed to a level that causes no tangible ill effects.
(4) Since the state of the quantity of ammonia can be determined in a short time by the EGR decrease control, the control is robust and the quantity of ammonia slip can be suppressed in a short time.
(5) Since the system according to the first embodiment is accomplished only by adding software (program) of the EGR decrease control and the control of increase and decrease of the quantity of urea to be supplied (quantity of urea supply) without adding any hardware, cost increase for changing the system can be kept low.

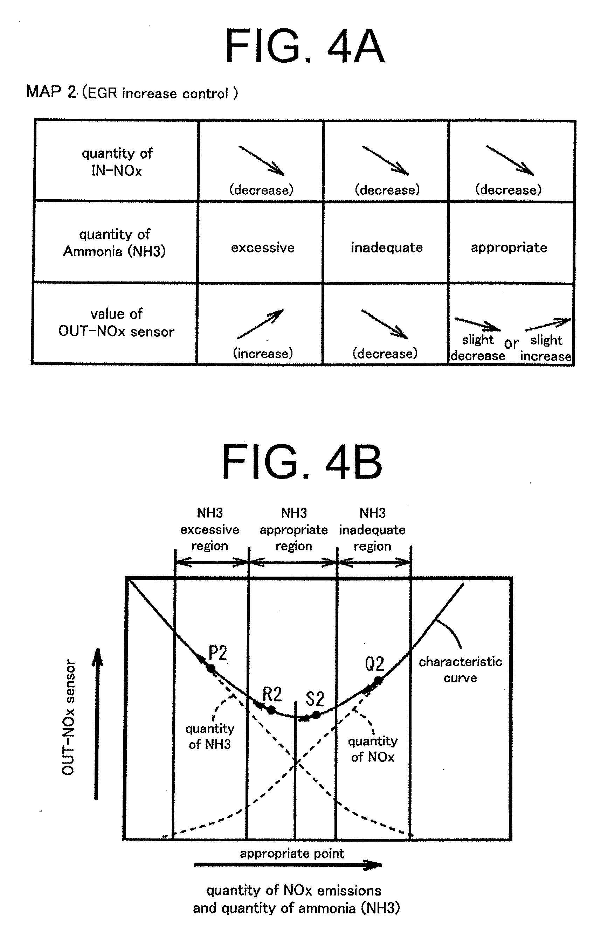

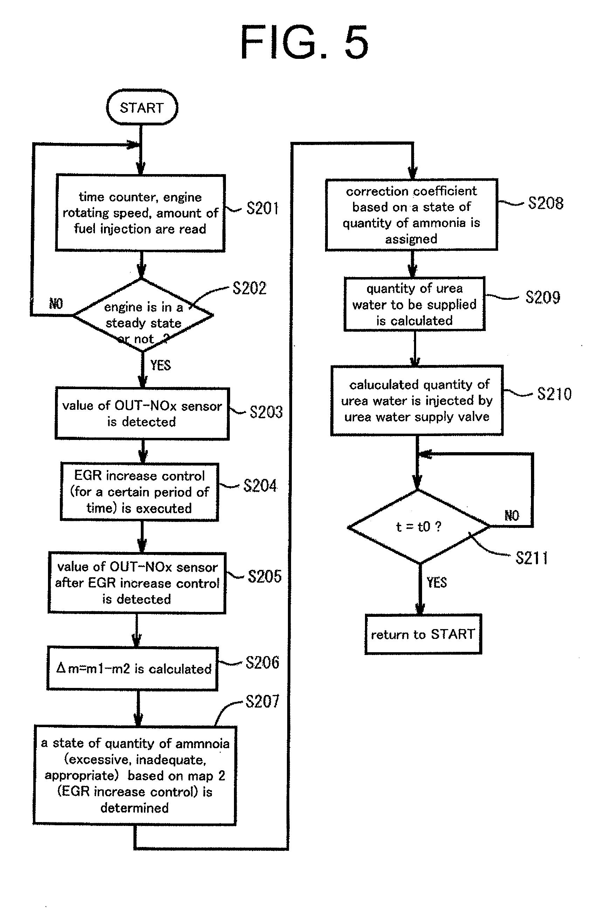

The following will describe the exhaust gas purification apparatus according to the second embodiment with reference to FIGS. 4 and 5. The exhaust gas purification apparatus according to the second embodiment is made by replacing the EGR decrease control by the EGR increase control in the exhaust gas purification apparatus according to the first embodiment. The rest of the structure and the operation of the exhaust gas purification apparatus according to the second embodiment are the same as those of the exhaust gas purification apparatus according to the first embodiment. The following description will use the same reference numerals for the common elements or components in the first and the second embodiments, and the description of such elements or components will be omitted.

Departing from the normal EGR control, the control device 34 is operable to force the opening of the EGR control valve 21 in the direction to open the valve for a predetermined period of time, thereby increasing the amount of exhaust gas refluxed through the EGR passage 20 (This control is hereinafter referred to EGR increase control). Accordingly, the quantity of NOx in exhaust gas discharged to the exhaust passage 19 is decreased. The state of quantity of ammonia in the SCR catalyst 24 (i.e. excessive, inadequate, appropriate) can be determined by detecting the change of values of the OUT-NOx sensor 33 before and after the EGR increase control.

FIG. 4A is a. configuration map 2 showing the relation between the state of quantity of ammonia and the OUT-NOx sensor value (a value detected by the OUT-NOx sensor 33) during EGR increase control. If the quantity of ammonia is excessive and ammonia slip occurs, the OUT-NOx sensor value shows an increasing tendency when the quantity of IN-NOx decreases. If the quantity of ammonia is inadequate and NOx reduction is not performed, the OUT-NOx sensor value shows a decreasing tendency when the quantity of IN-NOx decreases. If the quantity of ammonia is appropriate and NOx reduction is performed, the OUT-NOx sensor value shows a slightly increasing or a slightly decreasing tendency (or a no change) when the quantity of IN-NOx decreases.

FIG. 4B is a schematic configuration figure showing the relation among the quantity of NOx emission, the quantity of ammonia and the OUT-NOx sensor value for explaining what the map 2 means. Like the characteristic curve shown in FIG. 2B, this characteristic curve is convex downward with the quantities of NOx emission and the ammonia on the axis of abscissas and the OUT-NOx sensor value on the axis of ordinate.

This characteristic curve shows that the quantity of ammonia is the most appropriate for the quantity of NOx emission when the OUT-NOx sensor value is minimum. The characteristic curve is divided into three regions depending on the value of NOx emission. The region which includes the minimum OUT-NOx sensor value represents the ammonia appropriate region. The region in which the quantities of NOx emission and ammonia are less than those of the ammonia appropriate region represents the ammonia excessive region and the region in which the quantities of NOx emission and ammonia are more than those of the ammonia appropriate region represents the ammonia inadequate region.

When the quantity of IN-NOx decreases in the ammonia excessive region, the point P2 on the characteristic curve moves in arrow direction shown in FIG. 4B and, therefore, the OUT-NOx sensor value shows an increasing tendency. When the quantity of IN-NOx decreases in the ammonia inadequate region, the point Q2 on the characteristic curve moves in arrow direction shown in FIG. 4B and, therefore, the OUT-NOx sensor value shows a decreasing tendency. When the quantity of IN-NOx decreases in the ammonia appropriate region, points R2, S2 on the characteristic curve move in arrow direction shown in FIG. 4B and, therefore, the OUT-NOx sensor values show a slightly increasing tendency and a slightly decreasing tendency, respectively.

As appreciated from the above, by monitoring the change of the OUT-NOx sensor values during the EGR increase control, it can be determined easily which region of the OUT-NOx sensor value having cross-sensitivity is being detected. Therefore, the quantity of urea water to be supplied from the urea water supply valve 27 can be controlled based on the above determination. In other words, when the OUT-NOx sensor value tends to increase, the control device 34 determines that the quantity of ammonia contained in the exhaust gas is excessively large, thereby controlling so as to decrease the quantity of urea water to be supplied from the urea water supply valve 27. When the OUT-NOx sensor value tends to decrease, the control device 34 determines that the quantity of ammonia contained in the exhaust gas is inadequate, thereby controlling so as to increase the quantity of urea water to be supplied from the urea water supply valve 27. Further, when the OUT-NOx sensor value shows a slightly decreasing or increasing tendency, the control device 34 determines that the quantity of ammonia contained in the exhaust gas is appropriate, thereby controlling so as to keep the quantity of urea water being supplied from the urea water supply valve 27 unchanged.

The following will describe a process for controlling the exhaust gas purification apparatus 10 with reference to the flow chart shown in FIG. 5. When the processing routine starts, the time counter, the engine speed and the amount of fuel injection are read at S201. Then, at S202, the control device 34 determines whether the engine 11 is in a steady state or not based on the data of the time counter, the engine speed and the amount of fuel injection read at S201. The definition of the steady state in the second embodiment is the same as that of the steady state described in the first embodiment.

When it is determined at S202 that the engine 11 is not in the steady state, the control returns to S201 and the data is read again.

When it is determined at S202 that the engine 11 is in the steady state, the control proceeds to S203 where the value detected by the OUT-NOx sensor 33 is detected. Then at S204, the EGR increase control is executed forcibly, so that the operation of the EGR control valve 21 is controlled so that the opening degree of the EGR control valve 21 is increased for a certain period of time. Accordingly, amount of exhaust gas refluxed through the EGR passage 20 increases, thereby decreasing the quantity of IN-NOx in exhaust gas discharged into the exhaust passage 19. The above certain period of time is previously set to an appropriate time in accordance with the temperature of the SCR catalyst 24.

Then at S205, the value detected by the OUT-NOx sensor 33 after the execution of the EGR increase control is detected. Let m1 and m2 as the values (values detected by the OUT-NOx sensor 33 at S203, S205, respectively) before and after the EGR increase control, respectively. At S206, a difference value for the above values, i.e., Δm=m1-m2 is calculated. At S207, if Δm<-n (n is positive number), it is determined that the value detected by the OUT-NOx sensor 33 shows an increasing tendency, if Δ n, it is determined that the value detected by the OUT-NOx sensor 33 shows a decreasing tendency and if -n≦ Δ m ≦ n, it is determined that the value detected by the OUT-NOx sensor 33 shows a slightly increasing or decreasing tendency.

At S207, based on the map 2 showing the relation between the state of quantity of ammonia and the OUT-NOx sensor value during the EGR increase control, determination of the state of quantity of ammonia (i.e. excessive, inadequate or appropriate state) is made on the calculated OUT-NOx sensor value. For example, if the OUT-NOx sensor value shows an increasing tendency (Δ m<-n), it is determined that the quantity of ammonia is in the excessive state. If the OUT-NOx sensor value shows a decreasing tendency (Δ m>n), it is determined that the quantity of ammonia is in the inadequate state. If the OUT-NOx sensor value shows a slightly increasing or decreasing tendency (-n≦ Δ m ≦ n), it is determined that the quantity of ammonia is in the appropriate state.

At S208, based on the quantity of ammonia determined at S207, a correction coefficient is assigned. For example, correction coefficients 0.7, 1.3 and 1.0 are assigned for the excessive, inadequate and appropriate states, respectively. At S209, the quantity of urea water to be supplied is calculated. This calculation is executed based on the following calculation formula. Quantity of urea water to be supplied = base supply quantity x correction coefficient. For example, the quantity of urea water to be supplied in case of the excessive state is the base supply quantity x 0.7. The quantity of urea water to be supplied in case of the inadequate state is the base supply quantity x 1.3. The quantity of urea water to be supplied in the case of the appropriate state is the base supply quantity x 1.0.

At S210, a calculated amount of urea water is injected by the urea water supply valve 27. Then, at S211, it is determined whether time to has elapsed or not. When the time to has elapsed, the control procedure returns to the start and the sequence of procedures from S201 through S210 are executed again. When the time to has not yet elapsed, the procedure returns to S211. The above procedure is executed at a predetermined timing automatically based on a program stored in a memory of the control device 34.

The exhaust gas purification apparatus according to the second embodiment offers the following advantageous effects.
(6) Departing from the normal EGR control, the control device 34 is operable to force the opening of the EGR control valve 21 in the direction to open the valve for a predetermined period of time, thereby increasing the amount of exhaust gas refluxed through the EGR passage 20. Accordingly, the quantity of NOx in exhaust gas discharged to the exhaust passage 19 is decreased. By detecting the change of values of the QUT-NOx sensor 33 before and after the EGR increase control, the state of quantity of ammonia in the SCR catalyst 24 (i.e. excessive, inadequate or appropriate) can be determined.
(7) The map 2 shows a relation between a state of quantity of ammonia and an OUT-NOx sensor value during the EGR increase control. If the quantity of ammonia is excessive and ammonia is slipping, the OUT-NOx sensor value represents an increasing tendency when the quantity of IN-NOx decreases. If the quantity of ammonia is inadequate and NOx reduction is not performed, the OUT-NOx sensor value represents a decreasing tendency when the quantity of IN-NOx decreases. If the quantity of ammonia is appropriate and NOx reduction is performed, the OUT-NOx sensor value represents a slightly increasing or decreasing tendency (or no change) when the quantity of IN-NOx decreases. The state of quantity of ammonia in the SCR catalyst 24 can be determined from the OUT-NOx sensor value based on the map 2.
(8) When the OUT-NOx sensor value shows an increasing tendency after the EGR increase control, the control device 34 determines that ammonia contained in the exhaust gas is excessive, thereby controlling to decrease the quantity of urea water to be supplied from the urea water supply valve 27. When the OUT-NOx sensor value shows a decreasing tendency, the control device 34 determines that ammonia contained in the exhaust gas is inadequate, thereby controlling to increase the quantity of urea water to be supplied from the urea water supply valve 27. Further, when the OUT-NOx sensor value shows a slightly increasing or decreasing tendency, the control device 34 determines that ammonia contained in the exhaust gas is appropriate, thereby controlling to keep the quantity of urea water to be supplied from the urea water supply valve 27 unchanged. Since the quantity of urea water to be supplied can be controlled appropriately in accordance with the quantity of ammonia, the ammonia slip from SCR catalyst 24 can be suppressed. Also, by shortening the predetermined time of the EGR increase control, the increase in the quantity of NOx can be suppressed to a level that causes no tangible ill effects.
(9) Since the state of the quantity of ammonia can be determined in a short time by the EGR increase control, the control is robust and the quantity of ammonia slip can be suppressed in a short time.
(10) Since the system according to the second embodiment is accomplished only by adding software (program) of the EGR increase control and the control of increase and decrease of the quantity of urea to be supplied without adding any hardware, cost increase for changing the system can be kept low.

The following will describe the exhaust gas purification apparatus according to the third embodiment with reference to FIG. 3. The third embodiment differs from the first embodiment in that the OUT-NOx sensor values before and after EGR decrease control are stored as history data that is used for correcting the OUT-NOx sensor values. The following description will use the same reference numerals for the common elements or components in the first and the third embodiments and the description of such elements or components will be omitted.

The OUT-NOx sensor value detected by the OUT-NOx sensor 33 shows a variation caused by manufacturing error of devices such as the SCR catalyst 24 and the OUT-NOx sensor 33. The OUT-NOx sensor value also changes from its standard value due to the secular change (deterioration) of the SCR catalyst 24, the OUT-NOx sensor 33 and the like. In the present third embodiment, the OUT-NOx sensor values are stored in the control device 34 as history data. By analyzing the history data at a predetermined interval, the variation due to the manufacturing error and the change of the OUT-NOx sensor values due to the secular change can be checked and determined.

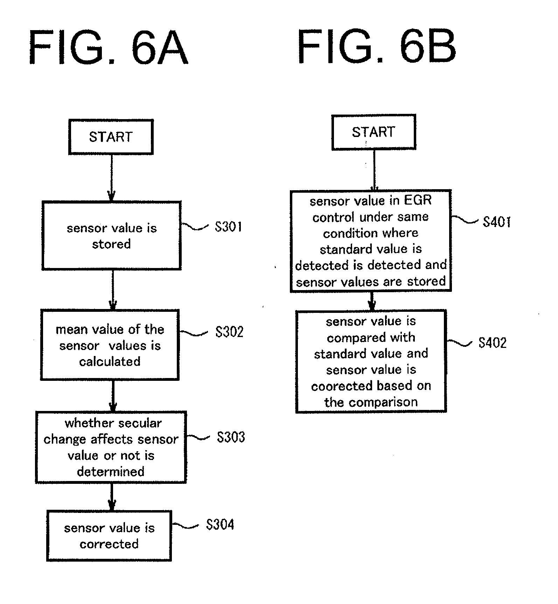

FIG. 6A is the flow chart showing the processing routine for correcting the error of the OUT-NOx sensor value due to the secular change. At S301, the OUT-NOx sensor value is stored in the control device 34 as history data. At S302, the mean value of the history data is calculated at a predetermined interval. For example, the mean value (mean value of ten times) of the OUT-NOx sensor values (a1 or a2) is calculated for each ten times of operation according to the processing routine shown in FIG. 3 and such mean value is stored in the control device 34. At S303, it is determined from the stored data of the mean values whether or not there is any influence due to the secular change. If the mean value of the OUT-NOx sensor values is significantly higher than that of the OUT-NOx sensor values stored previously or if the mean values of the OUT-NOx sensor values are found increasing continuously, the control device 34 determines that the secular change affects the OUT-NOx sensor value. Thus, the OUT-NOx sensor value is corrected by detecting a difference between the latest mean value and the previous mean value.

At S304, the OUT-NOx sensor value is corrected based on the determination at S303. For example, when it is determined that the mean value of the OUT-NOx sensor values is higher than that of the OUT-NOx sensor values detected previously and the OUT-NOx sensor value is affected by the secular change, the OUT-NOx sensor value detected is corrected so as to approximate its standard sensor value as much as possible. That is, the sensor values detected after the correction are regarded to be larger than their standard sensor values and the EGR control is performed based on the value that is obtained by subtracting the correction value from the OUT-NOx sensor value detected. The correction of errors due to the secular change is performed at a predetermined timing automatically according to the program stored in the memory of the control device 34.

FIG. 6B is the flow chart showing the processing routine for correcting OUT-NOx sensor value affected by the manufacturing error. OUT-NOx sensor value detected under a predetermined condition is regarded as the standard sensor value and stored in the memory in advance.

At S401, the EGR control is performed under the same condition as that in which the standard sensor value was detected and the OUT-NOx sensor values detected are stored in the control device 34 as the detected value. Specifically, the operation of the exhaust gas purification apparatus may be controlled so that the same condition where the standard sensor value was detected is reproduced and the OUT-NOx sensor values then detected may be stored as the detected value. Alternatively, among the history data of OUT-NOx sensor values stored in the control device 34, the OUT-NOx sensor values detected under the same condition where the standard sensor value was detected may be chosen and regarded as the value detected.

At S402, the OUT-NOx sensor value detected at S401 are compared with the standard sensor value and then corrected, accordingly. When the OUT-NOx sensor value is larger than the standard sensor value, the OUT-NOx sensor value is corrected so as to approximate its standard OUT-NOx sensor value as much as possible. In other words, the OUT-NOx sensor values detected after the correction are regarded to be larger than their standard OUT-NOx sensor values and then the EGR control is performed based on the value that is obtained by subtracting the correction value from the OUT-NOx sensor value.

The correction of the manufacturing error may be performed initially for each device or when the SCR catalyst 24, the OUT-NOx sensor 33 and the like are replaced with new ones for maintenance. The correction is performed automatically at a predetermined timing based on the program stored in the memory of the control device 34.

Since the correction of the manufacturing error and error due to the secular change is performed based on the stored OUT-NOx sensor values, it is possible to suppress the influence due to the manufacturing error and the error due to secular change. Other advantageous effects are the same as those described in the first embodiment and the description thereof will be omitted.

The present invention is not limited to the above embodiments and the invention may be practiced in various manners as exemplified below.

In the first and the second embodiments, the state of the quantity of ammonia is determined by the change of the OUT-NOx sensor values before and after the EGR increase or decrease control. Subsequently, a correction coefficient for urea supply is assigned based on the state of the quantity of ammonia and the quantity of urea to be supplied is calculated according to the correction coefficient. However, the amount of urea to be supplied may be calculated without using the correction coefficient. That is, the amount of ammonia (NH3) adsorbed on the SCR catalyst 24 is calculated from the quantity of IN-NOx (detected by the IN-NOx sensor 26), the value of the OUT-NOx sensor or the temperature of the SCR catalyst 24 (detected by the temperature sensor 31) and the amount of urea corresponding to the ammonia adsorption is calculated.

In the first and the second embodiments, the single control device is used for controlling the quantity of urea water to be supplied from the urea water supply valve 27 and the operation of the EGR control valve 21. The quantity of urea water supplied through the urea water supply valve 27 and the operation of the EGR control valve 21 may be controlled by separate control devices that communicate with each other.

In the third embodiment, the mean value of the OUT-NOx sensor values is used as history data. However, the cumulative value of the OUT-NOx sensor values, the number of times of significant corrections of the quantity of injection, and the mean value or the cumulative value of the corrected quantities of injection (corrected injection quantities) may be used as history data. When the amount of adsorption of ammonia (NH3) is calculated, the amount of adsorption of ammonia (NH3) may be also dealt with as history data.

An exhaust gas purification apparatus includes an exhaust passage through which exhaust gas discharged from an engine flows, a selective catalytic reduction catalyst provided in the exhaust passage, a urea water supply device for supplying urea water into the exhaust passage upstream of the selective catalytic reduction catalyst, a sensor responding to respective quantities of NOx and ammonia downstream of the selective catalytic reduction catalyst and detecting a value based on the response by the sensor, an exhaust gas recirculation passage through which a part of exhaust gas is refluxed to an intake system of the engine, an exhaust gas recirculation control valve for controlling amount of exhaust gas that is refluxed through the exhaust gas recirculation passage and a control device for controlling quantity of urea water supplied from the urea water supply device to the exhaust passage and also opening and closing of the exhaust gas recirculation control valve. The control device controls opening and closing of the exhaust gas recirculation control valve so as to increase or decrease the amount of exhaust gas refluxed through the exhaust gas recirculation passage for a predetermined period of time and also determines quantity of urea water based on change between the values detected by the sensor before and after changing opening and closing of the exhaust gas recirculation control valve.

## Claims

1. An exhaust gas purification apparatus (10) comprising:
an exhaust passage (19) through which exhaust gas discharged from an engine (11) flows;
a selective catalytic reduction catalyst (24) provided in the exhaust passage;
a urea water supply device (27) for supplying urea water into the exhaust passage upstream of the selective catalytic reduction catalyst;
a sensor (33) responding to respective quantities of NOx and ammonia downstream of the selective catalytic reduction catalyst and detecting a value based on the response by the sensor;
an exhaust gas recirculation passage (20) through which a part of exhaust gas is refluxed to an intake system of the engine;
an exhaust gas recirculation control valve (21) for controlling amount of exhaust gas that is refluxed through the exhaust gas recirculation passage; and
a control device (34) for controlling quantity of urea water supplied from the urea water supply device to the exhaust passage and also opening and closing of the exhaust gas recirculation control valve, **characterized in:**
**that** the control device controls opening and closing of the exhaust gas recirculation control valve so as to increase or decrease the amount of exhaust gas refluxed through the exhaust gas recirculation passage for a predetermined period of time and also determines quantity of urea water based on change between the values detected by the sensor before and after changing opening and closing of the exhaust gas recirculation control valve.

2. The exhaust gas purification apparatus according to claim 1, **characterized in:**
**that** the sensor detects quantity of NOx and has cross-sensitivity between ammonia and NOx.

3. The exhaust gas purification apparatus according to any one of claims 1 and 2, **characterized in:**
**that** when the amount of exhaust gas refluxed is decreased and the change between the values of the sensor tends to increase, the control device determines that the quantity of ammonia in the selective catalytic reduction catalyst is inadequate, thereby controlling so as to increase the quantity of urea water to be supplied, wherein when the amount of exhaust gas refluxed is decreased and the change between the values of the sensor tends to decrease, the control device determines that the quantity of ammonia in the selective catalytic reduction catalyst is excessive, thereby controlling so as to decrease the quantity of urea water to be supplied.

4. The exhaust gas purification apparatus according to any one of claims 1 and 2, **characterized in:**
**that** when the amount of exhaust gas refluxed is increased and the change between the values of the sensor tends to increase, the control device determines that the quantity of ammonia in the selective catalytic reduction catalyst is excessive, thereby controlling so as to decrease the quantity of urea water to be supplied, wherein when the amount of exhaust gas refluxed is increased and the change between the values of the sensor tends to decrease, the control device determines that the quantity of ammonia in the selective catalytic reduction catalyst is inadequate, thereby controlling so as to increase the quantity of urea water to be supplied.

5. The exhaust gas purification apparatus according to any one of claims 1 and 2, **characterized in:**
**that** the control device controls the quantity of urea water to be supplied based on calculated amount of ammonia adsorbed on the selective catalytic reduction catalyst.

6. The exhaust gas purification apparatus according to any one of claims 1 through 5, **characterized in:**
**that** the control device controls opening and closing of the exhaust gas recirculation control valve after the control device determines that the engine is in a steady state when engine speed and amount of fuel injection keeps substantially constant values, respectively.

7. The exhaust gas purification apparatus according to any one of claims 1 through 6, **characterized in:**
**that** the control device stores the detected values of the sensor as history data and corrects the value of the sensor that includes a variation caused by manufacturing error or secular change, based on the history data.

8. The exhaust gas purification apparatus according to claim 7, **characterized in:**
**that** the history data includes a plurality of mean values for the values of the sensor detected multiple times, wherein the value of the sensor is corrected by detecting a difference between the latest mean value and the previous mean value.

9. The exhaust gas purification apparatus according to any one of claims 7 through 8, **characterized in:**
**that** the history data includes standard sensor value, wherein the control device corrects the value of the sensor including the variation caused by the manufacturing error by comparing the value of the sensor detected under a predetermined operating condition of the exhaust gas recirculation with the standard sensor value stored previously.

10. A method for purifying exhaust gas, wherein an exhaust gas purification apparatus comprising:
an exhaust passage (19) through which exhaust gas discharged from an engine (11) flows;
a selective catalytic reduction catalyst (24) provided in the exhaust passage;
a urea water supply device (27) for supplying urea water into the exhaust passage upstream of the selective catalytic reduction catalyst;
a sensor (33) reacting to respective quantities of NOx and ammonia downstream of the selective catalytic reduction catalyst and detecting a value based on the reaction;
an exhaust gas recirculation passage (20) through which a part of exhaust gas refluxes to an intake system of the engine;
an exhaust gas recirculation control valve (21) for controlling amount of exhaust gas that is refluxed through the exhaust gas recirculation passage, **characterized in:**
**that** the method for the exhaust gas purification apparatus comprising the steps of:
controlling opening and closing of the exhaust gas recirculation control valve so as to increase or decrease the amount of exhaust gas refluxed through the exhaust gas recirculation passage for a predetermined period of time, departing from normal exhaust gas recirculation control ,
detecting change between the values detected by the sensor before and after changing opening and closing of the exhaust gas recirculation control valve, and
controlling quantity of urea water supplied from the urea water supply device to the exhaust passage based on the change.
